# EUROPÄISCHE PATENTSCHRIFT

(11) **EP 1 071 572 B1**
(45) Veröffentlichungstag und Bekanntmachung des Hinweises auf die Patenterteilung: **16.08.2006**
(21) Anmeldenummer: 00902657.6
(22) Anmeldetag: 05.02.2000
(51) Int. Cl.: B60J 7/047

(54) **VERSTELLVORRICHTUNG FÜR EIN MULTISPOILERDACH FÜR FAHRZEUGE**
ADJUSTING DEVICE FOR A MULTISPOILER ROOF FOR VEHICLES
DISPOSITIF D'AJUSTAGE POUR TOIT A AILERONS MULTIPLES DE VEHICULE

(30) Priorität: 15.02.1999 DE 29902662 U
(43) Veröffentlichungstag der Anmeldung: 31.01.2001
(73) Patentinhaber: ArvinMeritor GmbH, 63128 Dietzenbach (DE)
(72) Erfinder: BÖHM, Horst, D-60599 Frankfurt (DE); GRIMM, Rainer, D-60599 Frankfurt (DE)
(74) Vertreter: Kitzhofer, Thomas
(86) Internationale Anmeldenummer: PCT/EP2000/000918
(87) Internationale Veröffentlichungsnummer: WO 2000/048857

(56) Entgegenhaltungen:
- EP-A- 0 218 020
- DE-C- 4 329 583
- US-A- 5 836 642

## Beschreibung

Die Erfindung betrifft eine Verstellvorrichtung für ein Fahrzeugschiebedach, daß mindestens zwei Lamellen zum wahlweise Verschließen und wenigstens teilweisen Freilegen einer Dachöffnung in einer festen Dachfläche eines Fahrzeuges aufweist (Multispoilerdach) mit den Merkmalen des Oberbegriffs des Anspruchs 1.

Eine derartige gattungsgemäße Verstellvorrichtung ist aus der DE 43 29 583 Cl bekannt. Die Lamellen dieses Fahrzeugdaches grenzen in der Schließstellung aneinander an und bilden untereinander sowie mit der Dachhaut des Fahrzeuges einen flächigen Lamellenverbund. Jede Lamelle ist an ihren Schmalseiten mit Führungszapfen entlang von dachfesten Führungen geführt. Dabei sind die Führungszapfen im gesamten Verstellbereich der Lamellen mit den Führungen im Eingriff gehalten. Beim Öffnen der Lamellen wird der flächige Lamellenverbund durch Verschwenken jeweils einer nach der anderen Lamelle des Fahrzeugschiebedaches aufgelöst bzw. beim Schließen des Fahrzeugschiebedaches wieder hergestellt. - Allerdings sind dazu jeweils zwei benachbarte aneinander grenzende Lamellen über eine Schwenk- und Führungsmechanik ständig miteinander verbunden, unabhängig davon, ob das Fahrzeugschiebedach geschlossen oder geöffnet ist. Daher sind an den Längskanten jeder einzelnen Lamelle im wesentlichen über die gesamte Lamellenlänge sich erstreckende Führungsschienen angeordnet. Dieses führt nicht nur zu einer aufwendigen und komplizierten Führungsmechanik, sondern es ergibt sich zusätzlich ein erhöhtes Gewicht der Lamellen durch die zusätzlichen Führungsschienen an den Lamellen. Der minimal erreichbare Abstand der Lamellen in ihrer geöffneten Position zueinander ist durch die in aufgestellter Position sich ebenfalls aus der Fläche des Fahrzeugdaches herausstehenden zusätzlichen Führungsschienen begrenzt.

Der Erfindung liegt daher das technische Problem zugrunde eine Verstellvorrichtung für ein aus verschwenk- und verschiebbaren Lamellen bestehendes Fahrzeugschiebedach zu schaffen, die einfach aufgebaut und gleichwohl zuverlässig betreibbar und stabil ist.

Das zuvor aufgezeigte technische Problem wird erfindungsgemäß durch eine Verstellvorrichtung für ein Fahrzeugschiebedach mit den Merkmalen des Anspruches 1 gelöst. Erfindungsgemäß ist zum einen ein Antriebsschlitten vorgesehen, der in dem fahrzeugfesten Führungselement vor den Lamellentrageschlitten verschiebbar angeordnet ist und mit dem Verstellantrieb des Fahrzeugschiebedaches verbunden ist; zum anderen sind Verschwenk- und Kupplungsmittel vorgesehen, von denen die einen zwischen dem Antriebsschlitten und dem ersten Lamellentragelement sowie die anderen zwischen den Lamellentrageschlitten und den jeweils benachbarten Lamellentragelementen wirken. Beim Öffnen des Fahrzeugschiebedaches kommen die Verschwenk- und Kupplungsmittel nur an vorgegebenen Positionen in Eingriff miteinander und beim Schließen gelangen sie an den vorgegebenen Positionen wieder außer Eingriff voneinander.

Mit einer solchen Verstellvorrichtung ist die Öffnungs- und Schließfolge derart, daß zunächst die in Fahrtrichtung des Fahrzeuges vorderste Lamelle verschwenkt und nach hinten geschoben wird und die nachfolgenden Lamellen nacheinander entsprechend bewegt werden, wobei das Schließen in umgekehrter Reihenfolge erfolgt. In Schließstellung sind die Lamellentrageschlitten von dem zugeordneten Lamellentragelementen jeweils zweier benachbarter Lamellen des Fahrzeugschiebedaches räumlich voneinander getrennt und nicht miteinander gekoppelt. Erst dann, wenn während der Öffnungsbewegung die Verschwenk- und Kupplungsmittel in Eingriff miteinander gelangen, werden benachbarte Lamellentrageschlitten (bzw. der Antriebsschlitten) und Lamellentragelemente unter Verschwenken der zugehörigen Lamelle miteinander mechanisch gekoppelt und aufgrund dieser mechanischen Kopplung zusammen entlang der Fahrzeugdachöffnung verschoben. Beim Schließen des Fahrzeugschiebedaches gelangen dann die Verschwenk- und Kupplungsmittel an den vorgegebenen Positionen wieder außer Eingriff, so daß die mechanische Kupplung zwischen den Antriebs- bzw. Lamellentrageschlitten einerseits und den jeweils benachbarten Lamellentragelementen andererseits aufgelöst wird.

Bei einer erfindungsgemäßen Verstellvorrichtung ist die gesamte Mechanik vergleichsweise kompakt und einfach ausgebildet, so daß insbesondere nur ein kleiner Raum von der Verstellvorrichtung eingenommen wird. Auch der minimale Abstand der offenstehenden Lamellen zueinander kann geringer als bei den bekannten Fahrzeugschiebedächern sein.

In bevorzugter Weise sichern die Steuermittel der Lamellentragelemente in den Arbeitsphasen, in denen die Verschwenk- und Kupplungsmittel in Eingriff bzw. außer Eingriff gelangen, die Lamellen in ihrer Lage. Nachdem während des Schlie-ßens die Verschwenk- und Kupplungsmittel außer Eingriff voneinander gelangt sind bzw. bevor sie beim Öffnen in Eingriff miteinander gelangen, wirken keine weiteren Verstellkräfte auf die Lamellentrageschlitten bzw. die Lamellentragelemente der bereits in Schließstellung befindlichen Lamellen, so daß die Lamellen in ihrer Schließstellung verharren.

Während des Öffnungsvorganges gelangen die Verschwenk- und Kupplungsmittel, die zwischen den Lamellentrageschlitten bzw. dem Antriebsschlitten und Lamellentragelementen benachbarter Lamellen wirken, miteinander in Eingriff und das zugeordnete Lamellentragelement wird in die geöffnete Stellung verschwenkt und - im wesentlichen nachfolgend - verschoben. Durch das in Eingriffstehen der Verschwenk- und Kupplungmittel wird weiterhin das mechanische Ankoppeln zwischen benachbarten Schlitten bewirkt, so daß beim Schließvorgang ein Schleppverband zwischen den gekoppelten Schlitten existiert, der von dem Antriebsschlitten entlang des zumindest einen Führungselementes gezogen wird. Während des Schließvorganges gelangen die Verschwenk- und Kupplungsmittel an den vorgegebenen Positionen wieder außer Eingriff, wobei das jeweils hintere Lamellentragelement des Schleppverbandes in die geschlossene Stellung verschwenkt wird. Das Abkoppeln zwischen dem Antriebsschlitten und dem benachbarten Lamellentrageschlitten bzw. zwischen zwei benachbarten Lamellentrageschlitten wird also mit oder unmittelbar nach dem Herunterschwenken einer Lamelle bewirkt. Somit ergibt sich der Zustand, daß bei geschlossenem Fahrzeugschiebedach die einzelnen Schlitten und somit auch die Lamellen mechanisch entkoppelt sind.

In bevorzugter Weise sind die Verschwenk- und Kupplungsmittel als ein erster Steuernocken und eine erste Kulisse ausgebildet. Dabei ist der erste Steuernocken mit dem Lamellentragelement verbunden, während die erste Kulissenführung in dem Antriebsschlitten bzw. den benachbarten Lamellentrageschlitten ausgebildet ist - oder umgekehrt. Während des Öffnens des Fahrzeugschiebedaches gelangt dann der jeweils betroffene erste Steuernocken mit der an der zugewandten Seite, vorzugsweise offenen, zugeordneten ersten Kulisse in Eingriff. Während der erste Steuernocken in der ersten zugeordneten Kulisse verfahren wird, gibt die gekrümmte Form der Kulisse die Schwenkbewegung des Lamellentragelementes um den Schwenkzapfen herum vor.

In weiter bevorzugter Weise geben die Steuermittel vor, um welchen Betrag sich die jeweils zu verschwenkende Lamelle während der Verschwenkphase der Lamellen entlang des Führungselementes verschoben wird. Durch eine geeignete Ausgestaltung der Steuermittel kann somit die komplizierte Bewegung, die sich zu Beginn des Öffnens bzw. zum Ende des Schließens aus einer translatorischen und einer Schwenkbewegung zusammensetzt, exakt vorgegeben werden. Dieses ist u.a. im Hinblick auf die Belastung der zwischen den einzelnen Lamellen angeordneten Dichtungen zu Beginn des Öffnungsvorganges bzw. zum Ende des Schließvorganges von großer Bedeutung.

In besonders bevorzugter Weise sind die Steuermittel als zweite Steuernocken und als zweite Kulisse ausgebildet, wobei der zweite Steuernocken an dem Lamellentragelement und die zweite Kulisse in dem oder beiden fahrzeugfesten Seitenteilen vorgesehen ist. Da der zweite Steuernocken ständig im Eingriff mit der zugeordneten Kulisse steht, ist durch die Form der Kulisse in jeder Position der Lamelle relativ zum Fahrzeugdach der Stellwinkel der Lamelle (mit)vorgegeben. Denn zusätzlich zum zweiten Steuernocken ist auch der erste Steuernocken in seiner Position relativ zum Fahrzeugdach durch die erste Kulisse vorgegeben.

Bei einer bevorzugten Ausführungsform ist weiterhin vorgesehen, daß der erste Steuernocken in Fahrtrichtung des Fahrzeugs vor dem Schwenkzapfen und der zweite Steuernocken hinter dem Schwenkzapfen angeordnet ist - oder umgekehrt. Somit ergibt sich eine auf die Länge des Lamellentragelementes bezogene maximale Distanz zwischen den Abstützpunkten jeder Lamelle, so daß trotz der kompakten Ausgestaltung der Verstellvorrichtung eine ausreichende Stabilität der aufgestellten Lamelle insbesondere im Hinblick auf die angreifenden Kräfte des Fahrtwindes gewährleistet ist.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so daß die in dem Anwendungsgebiet bekannten Auswahlkriterien uneingeschränkt Anwendung finden können. Weitere Einzelheiten, Merkmale und Vorteile des Gegenstandes der Erfindung ergeben sich aus der nachfolgenden Beschreibung der zugehörigen Zeichnung, in der - beispielhaft - ein bevorzugtes Ausführungsbeispiel der erfindungsgemäßen Verstellvorrichtung dargestellt ist. In der Zeichnung zeigen:
- Fig. 1: ein Kraftfahrzeug mit einem aus Lamellen bestehenden Fahrzeugschiebedach in geschlossener Stellung,
- Fig. 2: das in Fig. 1 dargestellte Kraftfahrzeug mit dem Fahrzeugschiebedach in geöffneter Stellung,
- Fig. 3: die erfindungsgemäße Verstellvorrichtung in geschlossener Stellung im Querschnitt entlang der Linie III-III in Fig. 1,
- Fig. 4: die in Fig. 3 dargestellte Verstellvorrichtung in geöffneter Stellung im Querschnitt entlang der Linie IV-IV in Fig. 2,
- Fig. 5: ein Lamellentragelement der erfindungsgemäßen Verstellvorrichtung in einer Seitenansicht,
- Fig. 6: das in Fig. 5 dargestellte Lamellentragelement in einer Ansicht von oben,
- Fig. 7: ein Lamellentrageschlitten der erfindungsgemäßen Verstellvorrichtung in einer Seitenansicht,
- Fig. 8: den in Fig. 7 dargestellten Lamellentrageschlitten in einer Ansicht von oben,
- Fig. 9: eine Ausgestaltung der zweiten Kulisse der erfindungsgemäßen Verstellvorrichtung in einer schematischen Darstellung,
- Fig. 10: die erfindungsgemäße Verstellvorrichtung im Querschnitt entlang der Linie X-X in Fig. 1 und
- Fig. 11: die erfindungsgemäße Verstellvorrichtung im Querschnitt entlang der Linie XI-XI in Fig. 1.

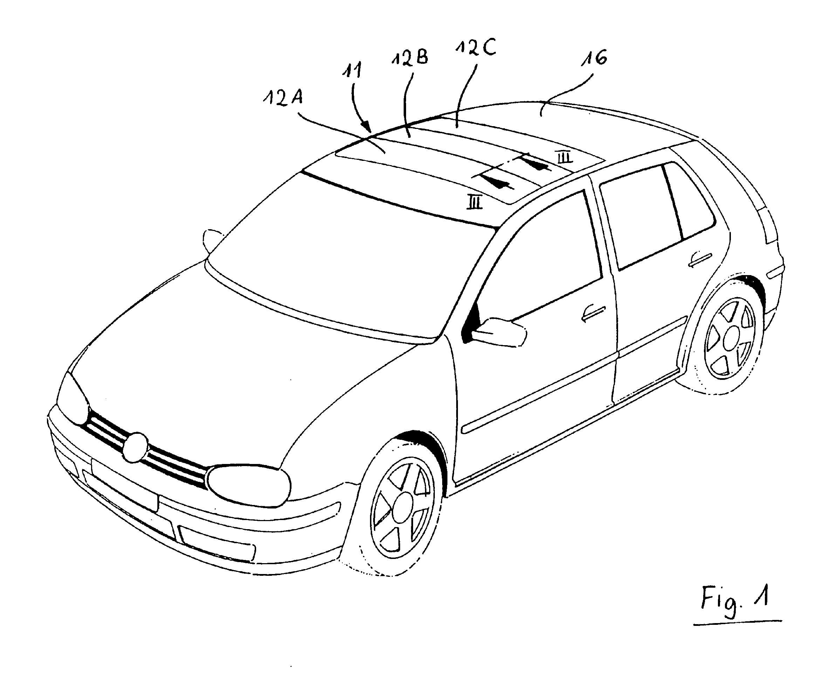

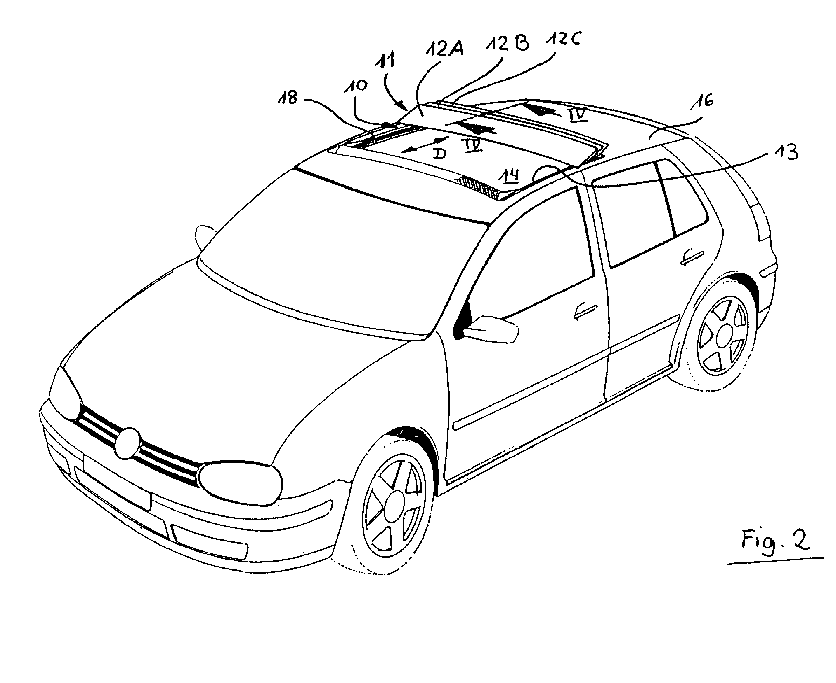

In den Fign. 1 und 2 ist ein Kraftfahrzeug dargestellt, das mit einer erfindungsgemäßen Verstellvorrichtung 10 für ein Fahrzeugschiebedach 11 versehen ist, das eine Mehrzahl von Lamellen 12A, 12B und 12C zum wahlweisen Verschließen und wenigstens teilweisen Freilegen einer Dachöffnung 14 in einer festen Dachfläche 16 des Fahrzeuges aufweist. Die Dachöffnung 14 weist ein Grundteil 13 mit einander gegenüberliegenden, eine Längsrichtung D definierenden Seitenteilen 18 auf. Weiterhin sind die Lamellen 12A, 12B und 12C um eine im wesentlichen horizontale Achse verschwenkbar sowie entlang der Längsrichtung D verschiebbar angeordnet.

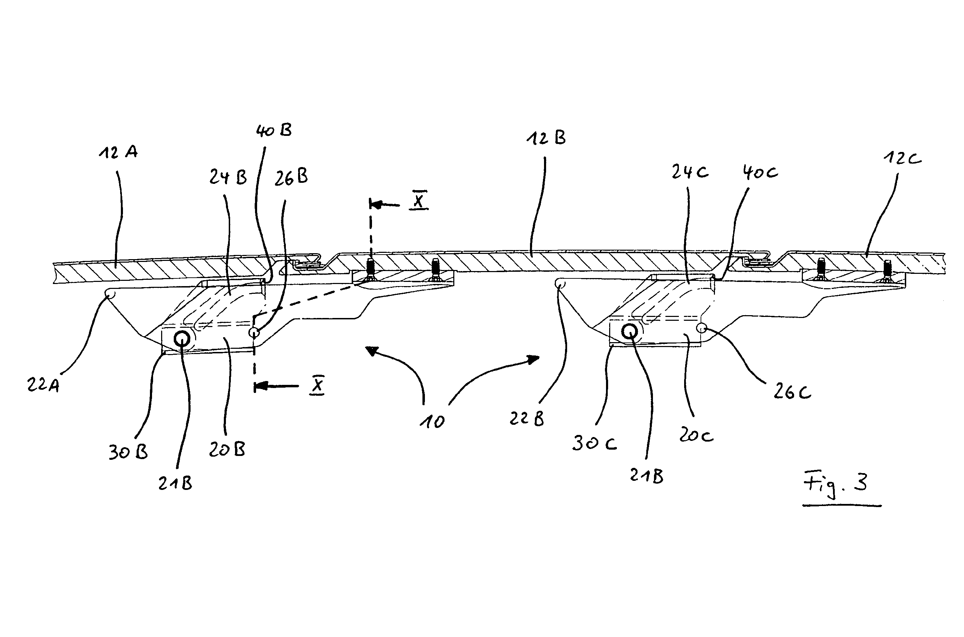

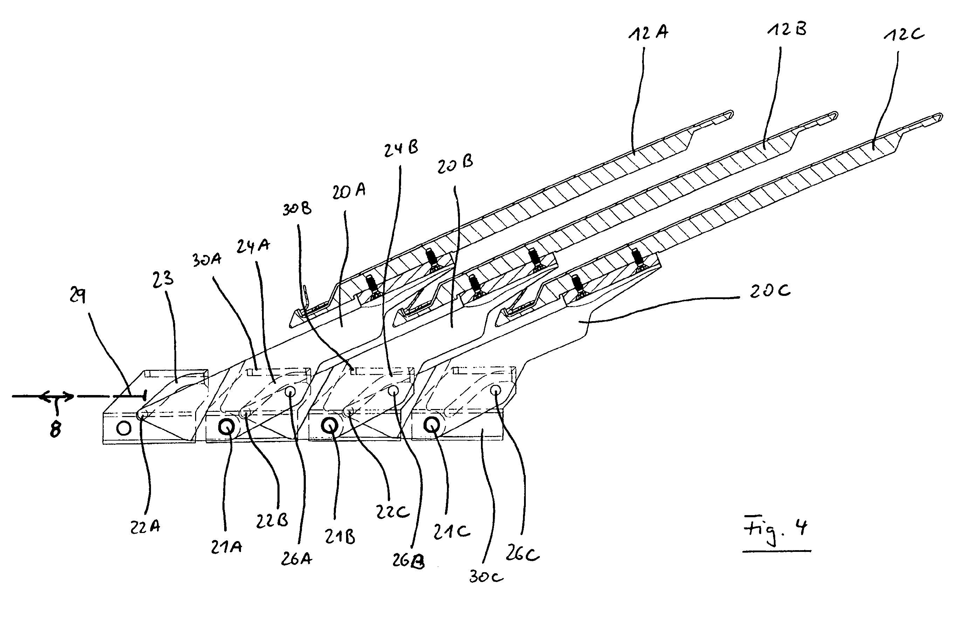

Die Verstellvorrichtung ist in den Fign. 3 und 4 in einer geschlossenen und einer geöffneten Position des Fahrzeugschiebedaches 11 dargestellt. Die Verstellvorrichtung 10 weist für jede der Lamellen 12A, 12B und 12C jeweils mindestens ein Lamellentragelement 20A, 20B und 20C auf, das mit der zugehörigen Lamelle 12A, 12B und 12C verbunden ist. Im dargestellten Ausführungsbeispiel ist an jeder Lamelle 12A, 12B und 12C an den an den Seitenteilen 18 angrenzenden Enden jeweils ein Lamellentragelement 20A, 20B oder 20C befestigt. Das Lamellentragelement 20A, 20B, 20C ist um einen quer zur Längsrichtung D verlaufenden Schwenkzapfen 21A, 21B, 21C verschwenkbar angeordnet. Ebenso ist das Lamellentragelement 20A, 20B, 20C entlang der Längsrichtung D verschiebbar, wie im folgenden beschrieben wird.

Die Verstellvorrichtung 10 weist zwei sich entlang der Längsrichtung D erstreckende, an dem Grundteil 13 bzw. an den Seitenteilen 18 angeordnete Führungselemente 32 auf. Entlang der Führungselemente 32 sind Lamellentrageschlitten 30A, 30B, 30C verschiebbar geführt, wobei jeweils zwei Lamellentrageschlitten 30A, 30B, 30C für jede der Lamellen 12A, 12B und 12C vorgesehen sind. Die Lamellentrageschlitten 30A, 30B, 30C sind für das Verstellen der mit den Lamellentragelementen 20A, 20B, 20C verbundenen Lamellen 12A, 12B, 12C vorgesehen. Dazu erstrecken sich die Schwenkzapfen 21A, 21B, 21C, die mit den Lamellentrageschlitten 30A, 30B, 30C verbunden sind, durch entsprechend ausgebildete Bohrungen 38A, 38B, 38C, die in den Lamellentragelementen 20A, 20B, 20C ausgebildet sind.

Wie in Fig. 4 dargestellt ist, ist ein Antriebsschlitten 29 vorgesehen, der in dem Führungselement 32 vor den Lamellentrageschlitten 30A, 30B, 30C verschiebbar angeordnet ist, wobei der Antriebsschlitten 29 nicht mit einem Lamellentragelement verbunden ist. Daher dient der Antriebsschlitten 29 ausschließlich dem Antrieb zum Verstellen der Lamellentrageschlitten 30A, 30B, 30C und nicht zum Halten einer der Lamellen des Fahrzeugschiebedaches 11. Dazu ist der Antriebsschlitten 29 mit einem in der Zeichnung nicht dargestellten Verstellantrieb verbunden, der ein Verstellen des Antriebsschlittens 29 in Richtung der geöffneten Stellung sowie in Richtung der geschlossenen Stellung entlang der Richtung D ermöglicht. Als Verstellantrieb dient dabei ein an beiden Enden des Antriebsschlittens 29 befestigtes Antriebskabel 8, das sich über mindestens die gesamte Länge des Fahrzeugschiebedaches 11 erstreckt und in Form einer Schleife geführt ist. Zum Antrieb des Antriebsschlittens 29 ist weiterhin das Antriebskabel 8 mit einem motorischen Antrieb verbunden.

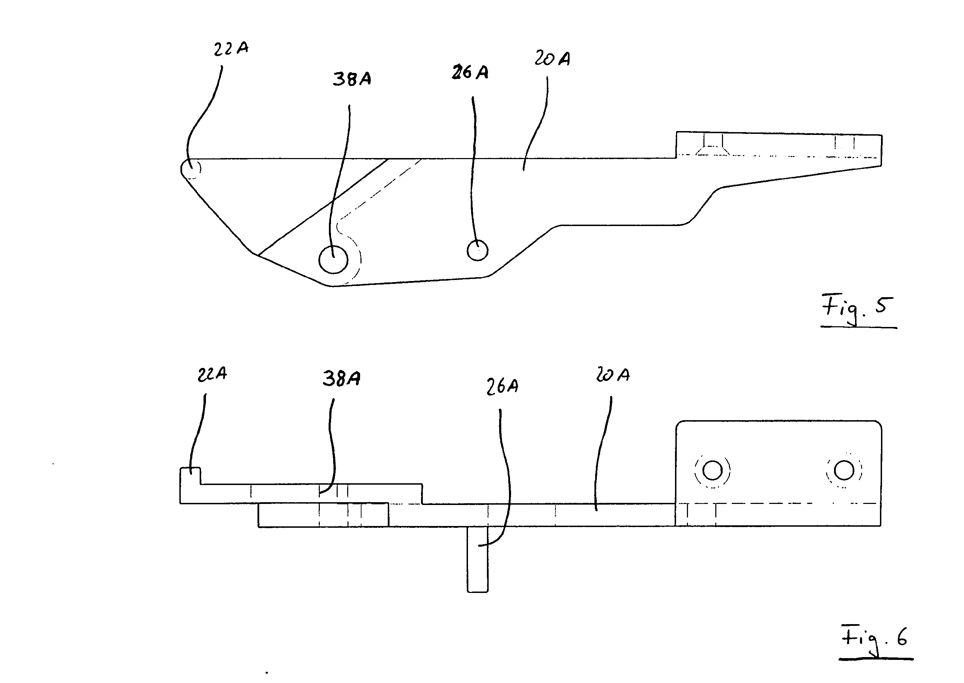

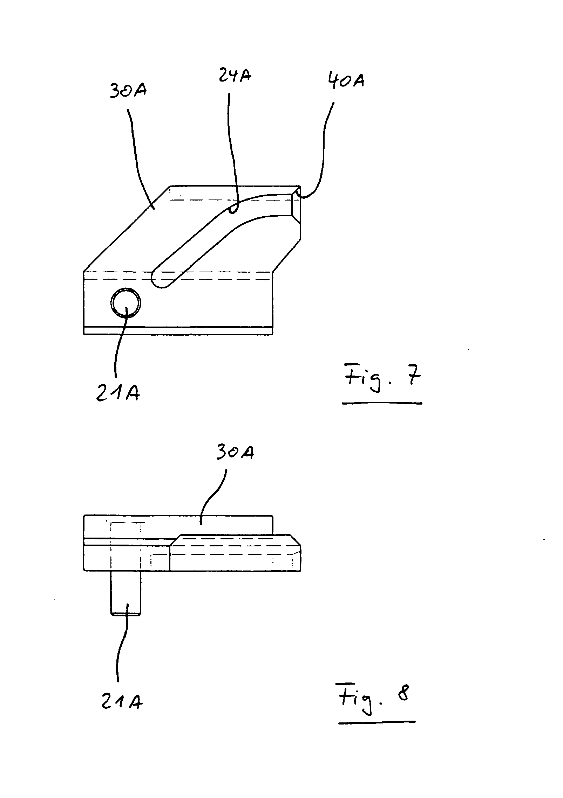

Erfindungsgemäß sind nun Verschwenk- und Kupplungsmittel vorgesehen, die im wesentlichen aus jeweils einem ersten Steuernocken 22A, 22B, 22C und einer ersten Kulisse 23, 24A, 24B bestehen. Dabei ist der erste Steuernocken 22A, 22B, 22C mit dem entsprechenden Lamellentragelement 20A, 20B, 20C verbunden. Des weiteren ist die erste Kulisse 23 im Antriebsschlitten 29 und die ersten Kulisse 24A und 24B in den Lamellentrageschlitten 30A, 30B ausgebildet. Dieses ist insbesondere in den Fign. 5 und 6, die ein Lamellentragelement 20 zeigen, und in Fig. 7, die einen Lamellentrageschlitten 30, im Detail zu erkennen. Des weiteren weist die erste Kulisse 23, 24A, 24B am offenen Ende einen konisch ausgebildeten Eingangsbereich 40A, 40B, 40C auf, um das Ineingriffgelangen der ersten Steuernocken 22A, 22B, 22C mit der ersten Kulisse 23, 24A, 24B zu erleichtern, falls es aufgrund eines mechanischen Spiels vorkommen sollte, daß der erste Steuernocken 22A, 22B, 22C nicht direkt auf der durch die erste Kulisse 23, 24A, 24B vorgegebenen Bahn verläuft.

Wie in Fig. 3 anhand der Lamellentrageschlitten 30B und 30C für ein geschlossenes Fahrzeugschiebedach 11 dargestellt ist, stehen der erste Steuernocken 22C und die erste Kulisse 24B nicht im Eingriff miteinander, sondern die Lamellentrageschlitten 30B und 30C und somit auch die Lamellentragelemente 20B und 20C sind beabstandet voneinander angeordnet. Somit kommt es zu keiner Überlappung der beiden Lamellentragelemente 20B und 20C. Wie weiter unten im Detail erläutert wird, gelangen die ersten Steuernocken 22A, 22B, 22C mit den entsprechenden ersten Kulisse 23, 24A, 24B an vorgegebenen Positionen in Eingriff miteinander, während sie beim Schließen des Fahrzeugschiebedaches 11 an den vorgegebenen Positionen wieder außer Eingriff voneinander gelangen. Somit wird eine mechanische Kupplung des Antriebsschlittens 29 und der Lamellentrageschlitten 30A und 30B mit den Lamellentragelementen 20A, 20B, 20C erst während des Öffnungsvorganges hergestellt, wobei diese mechanischen Kupplungen jeweils während des Schließvorganges wieder gelöst werden. Daher ergibt sich in vorteilhafter Weise, daß die erfindungsgemäße Verstellvorrichtung einen kompakten Aufbau besitzen und somit platzsparend ausgebildet sind.

Für die Führung der aus Schwenkbewegung und Linearbewegung zusammengesetzten Bewegung der Lamellen 12A, 12B, 12C sind weiterhin Steuermittel vorgesehen, die jeweils aus einem zweiten Steuernocken 26A, 26B, 26C und einer zweiten Kulisse 28A, 28B, 28C bestehen. Wie in den Fign. 5 und 6 dargestellt ist, sind die zweiten Steuernocken 26A, 26B, 26C mit den Lamellentragelementen 20A, 20B, 20C verbunden, insbesondere einteilig ausgebildet. Weiterhin sind die zweiten Kulissen 28A, 28B, 28C in dem jeweils zugeordneten Seitenteil 18 ausgebildet. Im eingebauten Zustand steht jeweils der zweite Steuernocken 26A, 26B, 26C mit der zugeordneten zweiten Kulisse 28A, 28B, 28C im Eingriff, so daß über den gesamten Bewegungsbereich des Lamellentragelementes 20A, 20B, 20C bzw. des zugeordneten Lamellentrageschlittens 30A, 30B, 30C eine genau vorgegebene Position des zweiten Steuernockens 26A, 26B, 26C vorgegeben ist. Denn durch die Form der zweiten Kulisse 28A, 28B, 28C ist für jede Position entlang der Richtung D die Höhenposition des zweiten Steuernockens 26A, 26B, 26C vorgegeben. Da weiterhin der Ablauf der Bewegung jedes Lamellentragelement 20A, 20B, 20C über den ersten Steuernocken 22A, 22B, 22C im Zusammenwirken mit der ersten Kulisse 23, 24A, 24B bestimmt wird, ist die exakte Bewegungsbahn des Lamellentragelementes 20A, 20B, 20C vorgegeben.

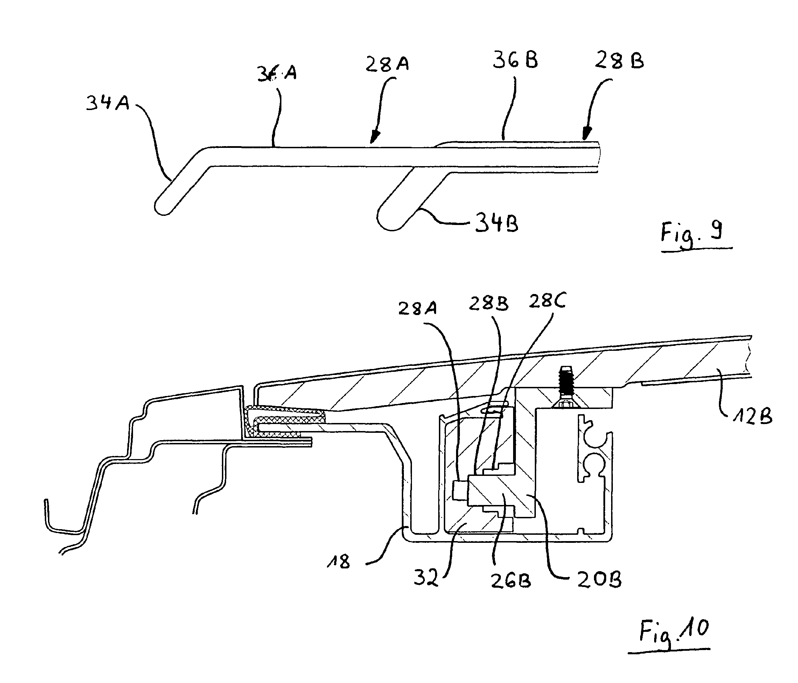

In Fig. 9 ist in schematischer Form die im vorliegenden Ausführungsbeispiel gewählte Form von zwei zweiten Kulissen 28A und 28B dargestellt. Die beiden Kulissen 28A und 28B weisen einen schräg verlaufenden Abschnitt 34A, 34B und einen horizontal ausgerichteten Abschnitt 36A, 36B auf. Befindet sich der zweite Steuernocken 26A am unteren Ende des schrägen Abschnittes 34A der zweiten Kulisse 28A, so ist das Lamellentragelement 20A in seiner nach unten geschwenkten Position angeordnet, so daß die zugeordnete Lamelle 12A sich in ihrer geschlossenen Stellung befindet. Verläuft nun während des Öffnungsvorganges der zweite Steuernocken 26A entlang des schrägen Abschnittes 34A der zweiten Kulisse 28A, so findet sowohl eine Linearbewegung als auch eine Schwenkbewegung des Lamellentragelementes 20A statt. Geht danach der zweite Steuernocken 26A in den horizontalen Abschnitt 36A der zweiten Kulisse 28A über, so verbleibt das Lamellentragelement 20A in seiner aufgestellten Position und wird beim weiteren Öffnen des Fahrzeugschiebedaches 11 in dieser Stellung nach hinten verschoben. Entsprechend umgekehrt verläuft der Schließvorgang. Somit wird gewährleistet, daß die zweiten Steuernocken 26A, 26B, 26C und die zweiten Kulissen 28A, 28B, 28C vorgeben, um welchen Betrag sich die jeweils zu verschwenkende Lamelle während des Verschwenkens der Lamelle 12A, 12B, 12C entlang des Führungselementes 32 verschiebt.

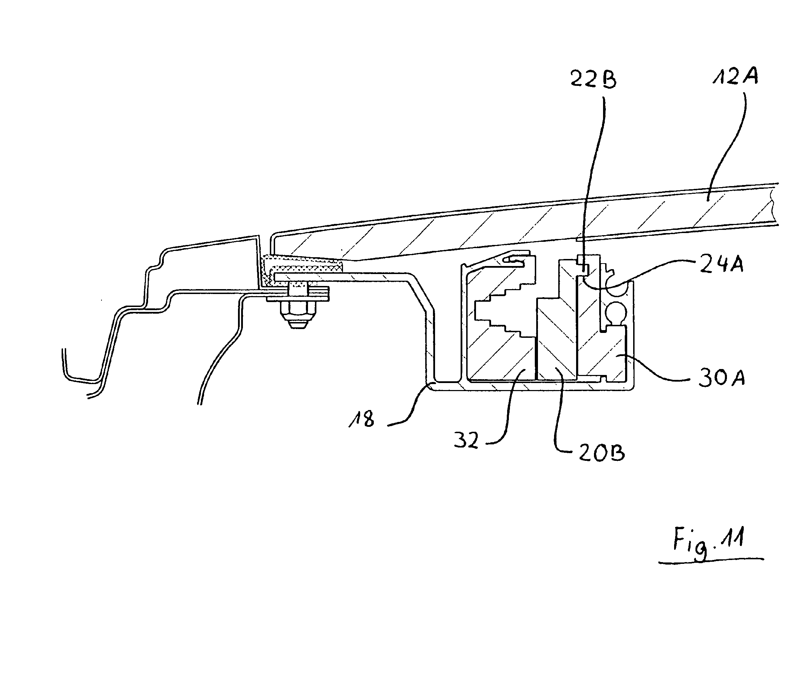

Das Eingreifen des zweiten Steuernockens 26B in die zweite Kulisse 28B ist in Fig. 10 dargestellt. Dabei zeigt Fig. 10 darüber hinaus, daß die zweiten Kulissen 28A, 28B, 28C in gestufter Form, also mit unterschiedlichen Breiten im Führungselement 32 ausgebildet sind. Dabei wird das Führungselement 32 von dem als Tragrahmen ausgebildeten Seitenteil 18 gehalten wird.

In Fig. 11 ist dagegen der Zustand dargestellt, in dem der erste Steuernocken 22B des Lamellentragelementes 20B mit der ersten Kulisse 24A des Lamellentrageschlittens 30A im oberen Bereich der ersten Kulisse 24A in Eingriff steht. Somit zeigt Fig. 11 die Stellung, in der die erfindungsgemäßen Verschwenk- und Kupplungsmittel während des Öffnens des Fahrzeugschiebedaches 11 in Eingriff miteinander gelangt sind bzw. während des Schließvorganges des Fahrzeugschiebedaches 11 außer Eingriff gelangen.

Wie weiterhin in den Fign. 4, 5 und 6 zu erkennen ist, ist der erste Steuernocken 22A in Richtung des Antriebsschlittens 29 vor dem Schwenkzapfen 21A und der zweite Steuernokken 26A hinter dem Schwenkzapfen 21A angeordnet. Dieses führt zu einer erhöhten Stabilität insbesondere bei aufgestellter Lamelle 12, da die beiden äußeren Auflage- bzw. Stützpunkte, die von den beiden Steuernocken 22A und 26A gebildet werden, einen relativ großen Abstand zueinander einnehmen. Somit kann die von der aufstehenden Lamelle 12 ausgeübten Hebelkräfte in geeigneter Weise aufgefangen werden.

Im folgenden wird die Funktionsweise der erfindungsgemäßen Verstellvorrichtung für den Öffnungsvorgang sowie den Schließvorgang im Detail erläutert.

Im geschlossenen Zustand des Fahrzeugschiebedaches 11 sind die Lamellen 12A, 12B, 12C in der Fläche des Fahrzeugdaches liegend angeordnet und der Antriebsschlitten 29 und die Lamellentrageschlitten 30A, 30B, 30C sowie die damit schwenkbar verbundenen Lamellentragelemente 20A, 20B, 20C sind beabstandet voneinander angeordnet. Somit befinden sich die Verschwenk- und Kupplungsmittel, die von den ersten Steuernocken 22A, 22B, 22C und den ersten Kulissen 23, 24A, 24B gebildet werden, nicht in Eingriff miteinander. Wird mit Hilfe des Verstellantriebes der Antriebsschlitten 29 zu Beginn des Öffnungsvorganges in Richtung D auf den benachbarten Lamellentrageschlitten 30A zu bewegt, so gelangen der erste Steuernocken 22A und die erste Kulisse 23 des Antriebsschlittens 29 miteinander in Eingriff. Durch eine weitere Bewegung in Richtung der geöffneten Stellung wird der erste Steuernocken 22A entlang der gekrümmten Bahn der Kulisse 23, die insbesondere in Fig. 7 zu erkennen ist, sowohl in horizontaler als auch vertikaler Richtung verschoben. Dadurch wird das Lamellentragelement 20A um den Schwenkzapfen 21A herum verschwenkt, so daß der zweite Steuernocken 26A in der zugeordneten zweiten Kulisse 28A entlang des schrägen Abschnittes 34A verstellt wird. Daraus ergibt sich zu Beginn des Aufstellens der Lamelle 12A, daß die Lamelle 12A zusammen mit dem Lamellentragelement 20A gleichzeitig nach oben verschwenkt und linear in Richtung der geöffneten Position verstellt wird. Während des weiteren Verstellens des Antriebsschlittens 29 in Richtung der geöffneten Position gelangt der erste Steuernocken 22A in Anlage an dem unteren Ende der ersten Kulisse 23. Somit wird der Schwenkvorgang des Lamellentragelementes 20A abgeschlossen, wobei sich gleichzeitig der zweite Steuernocken 26A am Anfang des horizontalen Abschnittes 36A der zweiten Kulisse 28A befindet. Eine weitere Verstellung des Antriebsschlittens 29 in Richtung der geöffneten Position des Fahrzeugschiebedaches bewirkt dann nur noch eine horizontale Verschiebung der aufgestellten Lamelle 12A.

Während des Eingreifens des ersten Schwenkzapfens 21A mit der Kulisse 23 wird nicht nur ein Verstellen der Lamelle 12A bewirkt, sondern auch eine Kupplung zwischen dem Antriebsschlitten 29 über das Lamellentragelement 20A mit dem Lamellentrageschlitten 30A hergestellt. Da aufgrund der Steuermittel, also des zweiten Steuernockens 26A und der zweiten Kulisse 28A, der erste Steuernocken 22A an der unteren Position innerhalb der Kulisse 23 gehalten wird, können die Verschwenk- und Kupplungsmittel nicht außer Eingriff miteinander gelangen.

Da die ersten Steuernocken 22B und 22C sowie die ersten Kulissen 24A und 24B in gleicher Weise ausgebildet sind, gelangen die Verschwenk- und Kupplungsmittel in der zuvor beschriebenen Weise miteinander in Eingriff.

Während des Schließvorganges wird der Verstellantrieb in der umgekehrten Richtung betrieben, so daß der Antriebsschlitten 29 die mit ihm mechanisch gekoppelten Lamellentrageschlitten 30A, 30B, 30C in Richtung der geschlossenen Position des Fahrzeugschiebedaches 11 verstellt. Wird dabei beispielsweise der zweite Steuernocken 26A innerhalb der zweiten Kulisse 28A von dem horizontalen Abschnitt 36A in den schrägen Abschnitt 34A verschoben, so beginnt das Verschwenken des Lamellentrageelementes 20A in Richtung der geschlossenen Position. Dadurch wird der erste Steuernocken 22A entlang der Kulisse 23 nach oben verschoben, bis der erste Steuernocken 22A außer Eingriff mit der ersten Kulisse 23 gelangt. Genau zu diesem Zeitpunkt erreicht die zugeordnete Lamelle 12A ihre geschlossene Position und während des weiteren Verschiebens des Antriebsschlittens 29 verbleibt der Lamellentrageschlitten 30A in seiner so erreichten Position, da keine mechanische Kopplung zwischen dem Antriebsschlitten 29 und dem Lamellentrageschlitten 30A mehr besteht.

### Bezugszeichenliste

- 8: Antriebskabel
- 10: Verstellvorrichtung
- 11: Fahrzeugschiebedach
- 12: Lamellen
- 13: Grundteil
- 14: Dachöffnung
- 16: Dachfläche
- 18: Seitenteile
- 20: Lamellentrageelement
- 21: Schwenkzapfen
- 22: erster Steuernocken
- 23: erste Kulisse
- 24: erste Kulisse
- 26: zweiter Steuernocken
- 28: zweite Kulisse
- 29: Antriebsschlitten
- 30: Lamellentrageschlitten
- 32: Führungselement
- 34: schräger Abschnitt von 28
- 36: horizontaler Abschnitt von 28
- 38: Bohrung in 20
- 40: konischer Eingangsbereich von 23, 24
- D: Längsrichtung

## Patentansprüche

1. Verstellvorrichtung für ein Fahrzeugschiebedach (11), das mindestens zwei Lamellen (12A, 12B, 12C) zum wahlweisen Verschließen und wenigstens teilweisen Freilegen einer Dachöffnung (14) in einer festen Dachfläche (16) eines Fahrzeuges aufweist und bei dem die Dachöffnung (14) von einem fahrzeugfesten Grundteil (13) mit einander gegenüberliegenden, eine Längsrichtung (D) definierenden Seitenteilen (18) begrenzt wird,
- mit mindestens je einem mit der zugehörigen Lamelle (12A, 12B, 12C) verbundenen Lamellentragelement (20A, 20B, 20C), das um einen quer zu der Längsrichtung (D) verlaufenden Schwenkzapfen (21A, 21B, 21C) verschwenkbar und entlang der Längsrichtung (D) verschiebbar ist,
- mit mindestens einem sich entlang der Längsrichtung (D) erstreckenden, an dem Grundteil (13) vorgesehenen Führungselement (32),
- mit mindestens je einem Lamellentrageschlitten (30A, 30B, 30C) je Lamelle (12A, 12B, 12C), der entlang dem Führungselement (32) verschiebbar geführt ist und die zugehörige Lamelle (12A, 12B, 12C) bewegt,
- mit Steuermitteln (26A, 28A; 26B, 28B; 26C, 28C), die die Bewegung der Lamellentragelemente (20A, 20B, 20C) während des Verschiebens der Lamellentrageschlitten (30A, 30B, 30C) entlang des Führungselementes (32) vorgeben, und
- mit Antriebsmitteln (8) zum Öffnen und Schließen des Fahrzeugschiebedaches,
**dadurch gekennzeichnet,**
**daß** ein Antriebsschlitten (29) vorgesehen ist, der in dem Führungselement (32), in Fahrtrichtung gesehen, vor den Lamellentrageschlitten (30A, 30B, 30C) verschiebbar angeordnet ist und mit den Antriebsmitteln (8) verbunden ist, und
**daß** Verschwenk- und Kupplungsmittel zum Verschwenken einer Lamelle und zum Verbinden und wieder Trennen von zwei Schlitten vorgesehen sind, von denen die einen zwischen dem Antriebsschlitten (29) und dem ersten Lamellentragelement (20A) sowie die anderen zwischen den Lamellentrageschlitten (30A, 30B) und den jeweils benachbarten Lamellentragelementen (20B, 20C) wirken und die beim Öffnen des Fahrzeugschiebedaches (11) an vorgegebenen Positionen in Eingriff miteinander und beim Schließen des Fahrzeugschiebedaches (11) an den vorgegebenen Positionen wieder außer Eingriff voneinander gelangen.

2. Verstellvorrichtung nach Anspruch 1, **dadurch gekennzeichnet, daß** die Steuermittel in den Arbeitsphasen, in denen die Verschwenk- und Kupplungsmittel in Eingriff bzw. außer Eingriff gelangen, die Lamelle (12A, 12B, 12C) in ihrer Lage sichern.

3. Verstellvorrichtung nach Anspruch 1 oder 2, **dadurch gekennzeichnet, daß** die Verschwenk- und Kupplungsmittel, während sie beim Öffnen des Fahrzeugschiebedaches (11) miteinander in Eingriff gebracht werden, das zugeordnete Lamellentragelement (20A, 20B, 20C) in die geöffnete Stellung verschwenken und, im wesentlichen nachfolgend, verschieben und gleichzeitig ein Ankoppeln zwischen dem Antriebsschlitten (29) und dem nachfolgenden Lamellentrageschlitten (30A) bzw. zwischen den benachbarten Lamellentrageschlitten (30A, 30B, 30C) bewirken.

4. Verstellvorrichtung nach einem der Ansprüche 1 bis 3, **dadurch gekennzeichnet, daß** die Verschwenk- und Kupplungsmittel, während sie beim Schließen des Fahrzeugschiebedaches (11) außer Eingriff gelangen, das zugeordnete Lamellentragelement (20A, 20B, 20C) in die geschlossene Stellung verschwenken und gleichzeitig ein Abkoppeln zwischen dem Antriebsschlitten (29) und dem nachfolgenden Lamellentrageschlitten (30A) bzw. zwischen den benachbarten Lamellentrageschlitten (30A, 30B, 30C) bewirken.

5. Verstellvorrichtung nach einem der Ansprüche 1 bis 4, **dadurch gekennzeichnet, daß** die Verschwenk- und Kupplungsmittel als ein erster Steuernocken (22A, 22B, 22C) und eine erste Kulisse (23, 24A, 24B) gestaltet sind, wobei entweder der erste Steuernocken (22A, 22B, 22C) an dem Lamellentragelement (20A, 20B, 20C) ausgebildet ist und die erste Kulisse (23, 24A, 24B) an dem Antriebsschlitten (29) bzw. dem Lamellentrageschlitten (30A, 30B) vorgesehen ist oder das Lamellentragelement die erste Kulisse und der Schlitten den ersten Steuernocken aufweist.

6. Verstellvorrichtung nach einem der Ansprüche 1 bis 5 **dadurch gekennzeichnet, daß** die Steuermittel (26A, 28A; 26B, 28B; 26C, 28C) vorgeben, um welchen Betrag sich die jeweils zu verschwenkende Lamelle während des Verschwenkens der Lamelle (12A, 12B, 12C) entlang des Führungselementes (32) verschiebt.

7. Verstellvorrichtung nach einem der Ansprüche 1 bis 6, **dadurch gekennzeichnet, daß** die Steuermittel ein zweiter Steuernocken (26A, 26B, 26C) und eine zweite Kulisse (28A, 28B, 28C) sind, wobei der zweite Steuernocken (26A, 26B, 26C) an dem Lamellentragelement (20A, 20B, 20C) und die zweite Kulisse (28A, 28B, 28C) an dem Seitenteil (18) vorgesehen ist.

8. Verstellvorrichtung nach einem der Ansprüche 1 bis 7, **dadurch gekennzeichnet, daß** der erste Steuernocken (22A, 22B, 22C) vor dem Schwenkzapfen (21A, 21B, 21C) und der zweite Steuernocken (26A, 26B, 26C) hinter dem Schwenkzapfen (21A, 21B, 21C) - oder umgekehrt - angeordnet sind.

## Claims

1. An adjusting device for a vehicular sliding roof (11), the latter comprising at least two panels (12A, 12B, 12C) for selectively closing and at least partially exposing a roof opening (14) in a fixed roof surface (16) of a vehicle, and in which the roof opening (14) is limited by a vehicle-fixed base part (13) having side pieces (18) which are arranged opposite each other and define a longitudinal direction (D),
- comprising at least one panel support element (20A, 20B, 20C) each connected with the associated panel (12A, 12B, 12C), which panel support element can be swivelled about a pivot pin (21A, 21 B, 21C) extending transverse to the longitudinal direction (D) and can be shifted along the longitudinal direction (D),
- comprising at least one guide element (32) extending along the longitudinal direction (D) and provided on the base part (13),
- comprising at least one panel support carriage (30A, 30B, 30C) for each panel (12A, 12B, 12C), which panel support carriage is shiftably guided along the guide element (32) and moves the associated panel (12A, 12B, 12C),
- comprising control means (26A, 28A; 26B, 28B; 26C, 28C) which dictate the movement of the panel support elements (20A, 20B, 20C) during the shifting of the panel support carriages (30A, 30B, 30C) along the guide element (32), and
- comprising drive means (8) for opening and closing the vehicular sliding roof,
**characterised in that**
a drive carriage (29) is provided, which is shiftably arranged in the guide element (32) in front of the panel support carriages (30A, 30B, 30C), as seen in the direction of travel, and is connected with the drive means (8), and
**in that** pivoting and coupling means are provided for swivelling a panel and for connecting and re-separating two carriages, of which the ones act between the drive carriage (29) and the first panel support element (20A) and the others between the panel support carriages (30A, 30B) and the respective, neighbouring panel support elements (20B, 20C), and which during opening the vehicular sliding roof (11) come into engagement with each other at predefined positions and during closing the vehicular sliding roof (11) will be disengaged at the predefined positions.

2. The adjusting device according to claim 1, **characterised in that** the control means fix the panel (12A, 12B, 12C) in its position in the operation phases in which the pivoting and coupling means come into engagement with each other or will be disengaged.

3. The adjusting device according to claim 1 or 2, **characterised in that** the pivoting and coupling means, while they are brought to engage each other during opening the vehicular sliding roof (11), swivel the associated panel support element (20A, 20B, 20C) into the open position and shift it essentially thereupon, while they simultaneously bring about a coupling between the drive carriage (29) and the following panel support carriage (30A), or between the neighbouring panel support carriages (30A, 30B, 30C).

4. The adjusting device according to any one of the claims 1 to 3, **characterised in that** the pivoting and coupling means, while they will be disengaged during closing the vehicular sliding roof (11), swivel the associated panel support element (20A, 20B, 20C) into the closed position and simultaneously bring about an uncoupling between the drive carriage (29) and the following panel support carriage (30A), or between the neighbouring panel support carriages (30A, 30B, 30C).

5. The adjusting device according to any one of the claims 1 to 4, **characterised in that** the pivoting and coupling means are configured as a first control cam (22A, 22B, 22C) and a first slotted piece (23, 24A, 24B), with either the first control cam (22A, 228, 22C) being formed on the panel support element (20A, 20B, 20C) and the first slotted piece (23, 24A, 24B) being provided on the drive carriage (29) or the panel support carriage (30A, 308), or the panel support element comprising the first slotted piece and the carriage comprising the first control cam.

6. The adjusting device according to any one of the claims 1 to 5, **characterised in that** the control means (26A, 28A; 26B, 28B; 26C, 28C) dictate the amount by which the panel, to be swivelled in each case, moves along the guide element (32) during the swivelling of the panel (12A, 12B, 12C).

7. The adjusting device according to any one of the claims 1 to 6, **characterised in that** the control means are a second control cam (26A, 26B, 26C) and a second slotted piece (28A, 28B, 28C), with the second control cam (26A, 26B, 26C) being provided on the panel support element (20A, 20B, 20C) and the second slotted piece (28A, 28B, 28C) being provided on the side piece (18).

8. The adjusting device according to any one of the claims 1 to 7, **characterised in that** the first control cam (22A, 22B, 22C) is arranged in front of the pivot pin (21A, 21 B, 21C) and the second control cam (26A, 26B, 26C) is arranged behind the pivot pin (21 A, 21 B, 21 C), or vice versa.

## Revendications

1. Dispositif de réglage pour un toit ouvrant (11) de véhicule qui présente au moins deux lamelles (12A, 12B, 12C) pour sélectivement fermer ou dégager au moins partiellement une ouverture de toit (14) dans une surface de toit (16) rigide d'un véhicule et dans lequel l'ouverture de toit (14) est délimitée par une partie de base (13) solidaire au véhicule avec des parties latérales (18) opposées l'une à l'autre et définissant une direction longitudinale (D), comportant
- au moins un élément porteur de lamelle (20A, 20B, 20C) relié à la lamelle (12A, 12B, 12C) respective associée, lequel peut pivoter autour d'un tourillon (21A, 21 B, 21 C) s'étendant transversalement à la direction longitudinale (D) et peut se déplacer le long de la direction longitudinale (D),
- au moins un élément de guidage (32) s'étendant le long de la direction longitudinale (D) et prévu sur la partie de base (13),
- au moins un chariot porteur de lamelle (30A, 30B, 30C) respectif par lamelle (12A, 12B, 12C), lequel est guidé de manière à se déplacer le long de l'élément de guidage (32) et imprime un mouvement à la lamelle (12A, 12B, 12C) associée,
- des moyens de commande (26A, 28A ; 26B, 28B ; 26C, 28 C) qui prédéterminent le mouvement des éléments porteurs de lamelles (20A, 20B, 20C) pendant le déplacement du chariot porteur de lamelle (30A, 30B, 30C) le long de l'élément de guidage (32), et
- des moyens d'entraînement (8) pour ouvrir et fermer le toit ouvrant de véhicule,
**caractérisé en ce que**
il est prévu un chariot d'entraînement (29) qui est agencé de manière à se déplacer dans l'élément de guidage (32) devant le chariot porteur de lamelle (30A, 30B, 30C), vu dans le sens de la marche, et qui est relié aux moyens d'entraînement (8), et
**en ce que** des moyens de pivotement et des moyens d'accouplement sont prévus pour pivoter une lamelle et pour relier et de nouveau séparer deux chariots, moyens dont les uns agissent entre le chariot d'entraînement (29) et le premier élément porteur de lamelle (20A), et les autres agissent entre les chariots porteurs de lamelle (30A, 30B) et qui parviennent en engagement mutuel à des positions prédéterminées lorsqu'on ouvre le toit ouvrant (11) du véhicule, et qui parviennent de nouveau hors d'engagement les uns des autres aux positions prédéterminées lorsqu'on ferme le toit ouvrant (11) du véhicule.

2. Dispositif de réglage selon la revendication 1, **caractérisé en ce que** dans les phases de travail dans lesquelles les moyens de pivotement et les moyens d'accouplement parviennent en engagement ou hors d'engagement, respectivement, les moyens de commande arrêtent les lamelles (12A, 12B, 12C) dans leur position.

3. Dispositif de réglage selon la revendication 1 ou 2, **caractérisé en ce que** lorsqu'ils sont amenés en engagement mutuel pendant l'ouverture du toit ouvrant (11) du véhicule, les moyens de pivotement et les moyens d'accouplement pivotent l'élément porteur de lamelle (20A, 20B, 20C) associé jusque dans la position ouverte et le déplacent sensiblement à la suite, et en même temps, ils provoquent un accouplement entre le chariot d'entraînement (29) et le chariot porteur de lamelle (30A) suivant ou entre les chariots porteurs de lamelles voisins (30A, 30B, 30C), respectivement.

4. Dispositif de réglage selon l'une des revendications 1 à 3, **caractérisé en ce que** lorsqu'ils sont amenés hors d'engagement pendant la fermeture du toit ouvrant (11) du véhicule, les moyens de pivotement et les moyens d'accouplement pivotent l'élément porteur de lamelle (20A, 20B, 20C) associé dans la position fermée et provoquent en même temps un désaccouplement entre le chariot d'entraînement (29) et le chariot porteur de lamelle (30A) suivant ou entre les chariots porteurs de lamelles voisins (30A, 30B, 30C), respectivement.

5. Dispositif de réglage selon l'une des revendications 1 à 4, **caractérisé en ce que** les moyens de pivotement et les moyens d'accouplement sont réalisés sous forme d'une première came de commande (22A, 22B, 22C) et d'une première coulisse (23, 24A, 24B), soit la première came de commande (22A, 22B, 22C) étant réalisée sur l'élément porteur de lamelle (20A, 20B, 20C) et la première coulisse (23, 24A, 24B) étant prévue sur le chariot d'entraînement (29) ou sur le chariot porteur de lamelle (30A, 30B), soit l'élément porteur de lamelle présentant la première coulisse et le chariot présentant la première came de commande.

6. Dispositif de réglage selon l'une des revendications 1 à 5, **caractérisé en ce que** les moyens de commande (26A, 28A ; 26B, 28B; 26C, 28C) prédéterminent la distance sur laquelle la lamelle respective à pivoter se déplace le long de l'élément de guidage (32) pendant le pivotement de la lamelle (12A, 12B, 12C).

7. Dispositif de réglage selon l'une des revendications 1 à 6, **caractérisé en ce que** les moyens de commande sont une deuxième came de commande (26A, 26B, 26C) et une deuxième coulisse (28A, 28B, 28C), la deuxième came de commande (26A, 26B, 26C) étant prévue sur l'élément porteur de lamelle (20A, 20B, 20C) et la deuxième coulisse (28A, 28B, 28C) étant prévue sur la partie latérale (18).

8. Dispositif de réglage selon l'une des revendications 1 à 7, **caractérisé en ce que** la première came de commande (22A, 22B, 22C) est agencée devant le tourillon (21A, 21B, 21C) et la deuxième came de commande (26A, 26B, 26C) est agencée derrière le tourillon (21A, 21 B, 21 C) ou inversement,
